# EUROPEAN PATENT APPLICATION

(11) **EP 4 818 657 A1**
(43) Date of publication of application: **07.10.2026**
(21) Application number: 25382334.8
(22) Date of filing: 03.04.2025
(51) Int. Cl.: G01K 1/022, G01K 7/42

(54) **A COMPUTER-IMPLEMENTED METHOD, A SYSTEM AND A COMPUTER PROGRAM FOR ESTIMATING THE TEMPERATURE OF A REFRIGERATED FOOD PRODUCT DURING TRANSPORT AND/OR STORAGE**

(71) Applicant: Ako Electromecánica S.A., 08812 Sant Pere de Ribes Barcelona (ES); Institut de Recerca i Tecnologia Agroalimentaries (IRTA), 08140 Caldes de Montbui (Barcelona) (ES)
(72) Inventor: ALBETS CHICO, Xavier, 08800 VILANOVA I LA GELTRÚ (ES); COMPASADA BERINGUES, Josep, 17468 VILAMARÍ (ES); MUÑOZ MORENO, Israel, 17190 SALT (ES)
(74) Representative: Ponti & Partners, S.L.P

(57) **Abstract**

The present invention relates to a computer-implemented method for estimating the temperature of a refrigerated food product during transport and/or storage, when said refrigerated food product is placed in a refrigerating chamber, comprising:
a) performing and recording a plurality of measurements of at least the temperature of the environment at which a refrigerated food product is exposed at least at a given time;
b) estimating temperature values for the refrigerated food product by computing data representative of that plurality of measurements using one or more natural convection heat transfer models; and
c) providing the temperature values estimated in step b).

The invention also concerns to a system and a computer program for estimating the temperature of a refrigerated food product during transport and/or storage adapted to implement the method of the present invention.

## Description

### Field of the Invention

The present invention relates, in a first aspect, to a computer-implemented method for estimating the temperature of a refrigerated food product during transport and/or storage, based on at least a natural convection heat transfer model.

A second aspect of the present invention relates to a system for estimating the temperature of a refrigerated food product during transport and/or storage adapted to implement the method of the first aspect.

A third aspect of the present invention relates to a computer program adapted to implement the method of the first aspect.

### Background of the Invention

Computer-implemented methods for estimating the temperature of a refrigerated food product during transport and/or storage, when said refrigerated food product is placed in a refrigerating chamber, are known in the art.

Some of those known methods assume that the temperature of the refrigerated food product is equal to the air temperature in the refrigerating chamber.

However, it is well known that the air temperature in a refrigerated space does not always match the temperature of the refrigerated product. The heat transfer between the air in the refrigerated space and the thermal inertia of the refrigerated product (the difficulty of the product's mass to change temperature, i.e., its heat storage capacity or specific heat) define the temperature of the refrigerated product.

If one wants to accurately determine the temperature of the refrigerated product, a probe can be installed on its surface and/or inside the product so that the temperature of the product can be verified it empirically. Incidentally, during many temporary transients, both temperatures will also differ from each other. Since installing probes in products is not generally feasible, there are two alternatives to estimate/simulate/theorize the temperature of the refrigerated product: 1) gel-type probes or probes in ampoules with liquid (known as buffered probes) and 2) simulation of the heat transfer process and energy accumulation of the product to obtain, via calculation, an estimate of the temperature of the refrigerated product, either on its surface or inside.

With respect to alternative 2), the methods known in the art dismiss the influence in the heat transfer process of some types of heat transfer phenomenon, particularly for refrigerated food products, and thus provide clearly improvable results in terms of estimates of the temperature of the refrigerated food product.

It is therefore necessary to provide an alternative to the state of the art which covers the gaps found therein, by providing a method for estimating the temperature of a refrigerated food product which is more efficient than those known in the state of the art, specifically providing a more accurate estimate of the temperature of the refrigerated product, under several different case scenarios.

### Description of the Invention

To that end, the present invention relates, in a first aspect, to a computer-implemented method for estimating the temperature of a refrigerated food product during transport and/or storage, when said refrigerated food product is placed in a refrigerating chamber, comprising:
a) performing and recording a plurality of measurements of at least the temperature of the environment at which a refrigerated food product is exposed at least at a given time;
b) estimating temperature values for the refrigerated food product by computing data representative of said plurality of measurements using one or more convection heat transfer models including one or more natural convection heat transfer models; and
c) providing the temperature values estimated in step b).

For some embodiments, said one or more convection heat transfer models used in step b) also include one or more forced convection heat transfer models.

Generally, step a) comprises performing and recording said plurality of measurements at different times.

According to an embodiment, the method of the first aspect of the present invention comprises performing step b) for one or more refrigerated food products not placed within any box, i.e. exposed directly to the air of the refrigerating chamber, the above mentioned at least one or more natural convection heat transfer models being used to quantify the temperature of those refrigerated food product(s) not placed within any box.

For another implementation of that embodiment, the method of the first aspect of the present invention comprises performing step b) for a period of time during which natural air convection around the refrigerated food product(s) is present and for another period of time during which a forced air convection around refrigerated food product(s) is present, and thus step b) comprises using one or more natural convention heat transfer models for natural convention heat transfer around the refrigerated food product(s) during that period of time, and also one or more forced convention heat transfer models for forced convention heat transfer around the refrigerated food product(s) during that another period of time.

According to an embodiment, the method of the first aspect of the present invention comprises performing step b) for one or more refrigerated food products placed inside at least one box, the above mentioned at least one or more natural convection heat transfer models being used to quantify the temperature of the refrigerated food product(s) inside and/or outside said at least one box. The at least one box is a closed box, i.e. it has a top cover and no holes.

For an implementation of that embodiment, the method of the first aspect of the present invention comprises performing step b) when a natural air convection around the refrigerated food product and/or at least one box is present during a period of time, and thus step b) comprises using one or more natural convention heat transfer models, preferably an external natural convention heat transfer model for natural convention heat transfer around the at least one box and an internal natural convention heat transfer model for natural convention heat transfer inside the box.

For another implementation of that embodiment, the method of the first aspect of the present invention comprises performing step b) when a forced air convection around the at least one box is present during a period of time, and thus step b) further comprises using one or more forced convention heat transfer models for forced convention heat transfer around the at least one box.

In an embodiment, the method of the first aspect of the present invention comprises performing step b) for a current time, by also computing data representative of the temperature, measured or estimated, for a previous time, of the refrigerated food product and the temperature of the environment at which the refrigerated food product was exposed at that previous time.

According to an embodiment, the method of the first aspect of the present invention comprises performing step b) by computing also data representative of physical properties and/or thermophysical properties and/or physical parameters of the refrigerated food product, including its size and/or shape and/or weight and/or dimensions, and/or by computing also data representative of physical properties and/or physical parameters of the at least one box, including its size and/or shape and/or material.

In an embodiment, the method of the first aspect of the present invention comprises performing steps a), b) and c) for a plurality of refrigerated food products placed within at least one box.

For an implementation of that embodiment, the method of the first aspect of the present invention comprises performing the computing of step b) with at least one natural convection heat transfer model that models internal natural convection due to air movement/motion through air voids existing between adjacent refrigerated food products of said plurality of refrigerated food products and/or between the refrigerated food products and the walls of the at least one box.

In an embodiment of the method of the first aspect of the present invention, at least some of the plurality of refrigerated food products are stacked within the at least one box, and at least some of those air voids exist between those stacked refrigerated food products.

For an embodiment, the method of the first aspect of the present invention comprises conducting step b) by computing also data representative of the effect on the heat transfer of the air conditions of the environment at which the refrigerated food product has been exposed for a given period of time.

For an embodiment, the one or more natural convection heat transfer models used in step b), when the refrigerated food product(s) is/are within the at least one box, includes data representative of the geometry of a, generally rectangular, prism simulating the box, data defining natural air convection from a point located at a bottom area of that prism.

According to an embodiment, the method of the first aspect of the present invention comprises performing said plurality of measurements of step a) during a cooling down process or cold-room short temperature excursions.

For some embodiments, the method of the first aspect of the present invention comprises performing said computing of step b) by means of a mathematical straight-forward equation.

According to an embodiment, that mathematical straight-forward equation is: ${T}_{p} = {T}_{0} + ΔT$ (1) where *Tₚ* refers to the estimated temperature for the refrigerated food product, *T*₀ is the temperature of the refrigerated food product for a previous time, and Δ*T* is a temperature difference defined as follows: $ΔT = \left({T}_{c}-{T}_{0}\right) ⋅ Δt ⋅ τ$ (2) where *T_{c}* is the air temperature inside said refrigerating chamber for said previous time, Δ*t* the time difference between the current time and said previous time, and *τ* is a coefficient that depends at least on the natural convection heat transfer model and that is also called below as "Temperature advance function".

In an implementation of that embodiment:
- for a refrigerated food product not placed within any box, exposed directly to the air of the refrigerating chamber, *τ* depends on at least one external natural convection heat transfer coefficient, representing the natural convection heat transfer between the refrigerated food product and the air of the refrigerating chamber, and, generally, also on at least one external forced convection heat transfer coefficient, representing a forced convection heat transfer between the refrigerated food product and the air of the refrigerating chamber provided, for example, by a fan; and
- for one or more refrigerated food products placed within at least one box, *τ* depends on:
   - at least one external natural convection heat transfer coefficient, representing the natural convection heat transfer between the at least one box and the air of the refrigerating chamber, and, generally, also on at least one external forced convection heat transfer coefficient, representing a forced convection heat transfer between the at least one box and the air of the refrigerating chamber provided, for example, by a fan, and
   - at least one internal natural convection heat transfer coefficient, representing the natural convection heat transfer due to air movement/motion through air voids existing between adjacent refrigerated food products and/or between the refrigerated food products and the walls of the at least one box.

According to first variants of that implementation, called below isolated product variants, for said refrigerated food product not placed within any box, *τ* also depends on the following parameters of the refrigerated food product: density, thermal conductivity, specific heat and dimensions, the type and number of those dimensional parameters depending on the shape of the refrigerated food product, wherein, for instance, those dimensional parameters are collected from dimensional parameters registered for at least the following shapes of the refrigerated food products: sphere, parallelepiped, slice, and cylinder.

According to other variants of that implementation, called below boxed product variants, for said one or more refrigerated food products placed within at least one box, *τ* also depends on the following parameters of an assembly formed by the one or more refrigerated food products, the at least one box, and the air existing within the at least one box: thermal conductivity of the assembly along each of three dimensions of the at least one box, average density of the assembly, and average specific heat of the assembly, and also of dimensional parameters of the at least one box.

### Isolated products:

Some of the equations used for those isolated product variants, according to embodiments of the method of the first aspect of the present invention, are shown below, specifically for those specific shapes of the refrigerated food products: sphere, parallelepiped, slice, and cylinder, although the explanation does not involve any limitation, i.e. any shape is considered as long as specific equations have been studied, developed and fitted to this purpose.

The following fundamental variables (some have already been identified above) will be used in the following equations:
- Shape: Sphere, parallelepiped, flat plate, cylinder, etc.
- *cₚ*: Specific heat [J/Kg·K].
- *ρ*: Density [kg/m³].
- *kₚ*: thermal conductivity [W/m·K].
- *R:* Radius [m], for sphere, flat plate (circular, such as that of a ham slice), and cylinder shapes.
- *H*: Height [m], for parallelepiped and flat plate shapes.
- *L*: Length [m], for a parallelepiped shape.
- *W*: Width/depth [m], for a parallelepiped shape.
- *FAN*: Forced air convection being provided around the refrigerated food product, i.e., when a fan in the refrigerating chamber is on, and is expressed on a per unit basis, from 0 to 1, for the analysed period of time.
- Δ*t*: Recording/sampling frequency, i.e. the time difference between the current time and a previous time. Generally expressed in seconds.
- *T*₀: The temperature of the refrigerated food product calculated for a previous time, i.e. at N-1. For the first sample, when there is no calculation, it is assumed to be equal to the refrigerating chamber temperature.
- Δ*T:* Temperature difference defined as indicated in equation (2) above.
- *T_{c}*: Refrigerating chamber air temperature.
- *Tₚ*: Estimated temperature for the refrigerated food product.

Depending on the embodiment, at least part of the necessary data to be introduced in the following equations, such as some or all of the above fundamental variables, will be provided by a user and/or obtained or assumed from a recorded list of different food products after a step of selecting the food product to be refrigerated.

For instance, tuna could be selected by a user (for example, via a computer interface, such as a touchscreen, of the system of the second aspect of the present invention) and the recorded list would provide the following data: shape = cylinder, *cₚ*= 0.495 J/Kg·K, *ρ* = 1078.942 kg/m³, *kₚ* = 3.574 W/m.K, *R* = 0.1 *m, L* = 0.4 m, and so on for a plurality of different food products. No further parameters would need to be manually selected, for an embodiment.

The product temperature is built based on intermediate functions, which are defined according to some of the below equations.

### Sphere shape:

For an embodiment for which the refrigerated food product has a sphere shape, the following intermediate functions will be used:
- *h_{ext_{forced}}*: Forced external heat transfer coefficient [W/m²·K].
- *h_{extₙₐₜᵤᵣₐₗ}*: Natural external heat transfer coefficient [W/m²·K].
- *h_{totₑₓₜ}*: Total external heat transfer coefficient [W/m²·K].
- *hᵢₙₜ*: Food product internal heat transfer coefficient [W/m²·K].
- *hₜₒₜ*: Overall heat transfer coefficient [W/m²·K].
- *τ*: Temperature advance function [1/s], used in equation (2) above, and which, as demonstrated below, is calculated using the data from a previous record.

The main of those intermediate functions is calculated according to the following equation: $τ = \frac{{h}_{tot} ⋅ \left(\frac{3}{R}\right)}{ρ ⋅ {c}_{p}}$ (3) *τ* is used in equation (2) above to calculate Δ*T* to finally calculate, by means of equation (1), the temperature *Tₚ* estimated for the refrigerated food product.

The rest of those intermediate functions, which are used to calculate *τ*, are calculated according to the following equations: ${h}_{tot} = \frac{1}{\frac{1}{{h}_{{tot}_{ext}}} + \frac{1}{{h}_{int}}}$ (4) ${h}_{int} = \frac{{k}_{p}}{\left(\frac{R}{4}\right)}$ (5) ${h}_{{tot}_{ext}} = {h}_{{ext}_{natural}} ⋅ \left(1-FAN\right) + {h}_{{ext}_{forced}} ⋅ \left(FAN\right)$ (6) ${h}_{{ext}_{natural}} = exp \left[\left({a}_{1}⋅ln\left|{T}_{0}-{T}_{c}\right|\right)-\left({a}_{2}⋅{lnR}^{2}\right)+{a}_{3}\right]$ (7)

According to experiments:
a₁ = 0.2154; ranging from 0.1 to 0.4
a₂ = 0.3328; ranging from 0.2 to 0.5
a₃ = 0.1977; ranging from 0.1 to 0.35
a₁, a₂ and a₃ are constants related to natural heat transfer in the case of an isolated spherical product, that for a specific embodiment have the above specific values, while for other embodiments they can be within those ranges. ${h}_{{ext}_{forced}} = exp \left[\left(-{a}_{4}⋅{lnR}^{2}\right)+{a}_{5}\right]$ (8)

According to experiments:
a₄ = 0.4318; ranging from 0.2 to 0.6
a₅ = 1.9223; ranging from 1 to 3
a₄ and a₅ are constants related to forced heat transfer in the case of an isolated spherical product, that for a specific embodiment have the above specific values, while for other embodiments they can be within those ranges.

### Parallelepiped shape:

For an embodiment for which the refrigerated food product has a parallelepiped shape, the following intermediate functions will be used:
- *h*_{*ext*_{forced1}} : Forced external heat transfer coefficient according to dimension *H* [W/m²·K].
- *h*_{*ext*_{forced2}} : Forced external heat transfer coefficient according to dimension *L* [W/m²·K].
- *h*_{*ext*_{forced3}} : Forced external heat transfer coefficient according to dimension *W* [W/m²·K].
- *h*_{*ext*ₙₐₜᵤᵣₐₗ₁} : Natural external heat transfer coefficient according to dimension *H* [W/m²·K].
- *h*_{*ext*ₙₐₜᵤᵣₐₗ₂} : Natural external heat transfer coefficient according to dimension *L* [W/m²·K].
- *h*_{*ext*ₙₐₜᵤᵣₐₗ₃}: Natural external heat transfer coefficient according to dimension *W* [W/m²·K].
- *h*_{*tot*ₑₓₜ₁}: Total external heat transfer coefficient according to dimension *H* [W/m²·K].
- *h*_{*tot*ₑₓₜ₂}: Total external heat transfer coefficient according to dimension *L* [W/m²·K].
- *h*_{*tot*ₑₓₜ₃}: Total external heat transfer coefficient according to dimension *W* [W/m²·K].
- *h*_{*int*1}: Food product internal heat transfer coefficient according to dimension *H* [W/m²·K].
- *h*_{*int*2}: Food product internal heat transfer coefficient according to dimension *L* [W/m²·K].
- *h*_{*int*3}: Food product internal heat transfer coefficient according to dimension *W* [W/m²·K].
- *h*_{*tot*1}: Overall heat transfer coefficient according to dimension *H* [W/m²·K].
- *h*_{*tot*2}: Overall heat transfer coefficient according to dimension *L* [W/m²·K].
- *h*_{*tot*3}: Overall heat transfer coefficient according to dimension W [W/m²·K].
- *τ*: Temperature advance function [1/s], used in equation (2) above, and which, as demonstrated below, is calculated using the data from a previous record.
- *τ*₁: Temperature advance function [1/s] according to dimension *H* [W/m²·K].
- *τ*₂: Temperature advance function [1/s] according to dimension *L* [W/m²·K].
- *τ*₃: Temperature advance function [1/s] according to dimension *W* [W/m²·K].

The main of those intermediate functions is calculated according to the following equation: $τ = {τ}_{1} + {τ}_{2} + {τ}_{3}$ (9) *τ* is used in equation (2) above to calculate Δ*T* to finally calculate, by means of equation (1), the temperature *Tₚ* estimated for the refrigerated food product.

The rest of those intermediate functions, which are used to calculate *τ*, are calculated according to the following equations: ${τ}_{1} = \frac{{h}_{{tot}_{1}} ⋅ \left(\frac{2}{H}\right)}{ρ ⋅ {c}_{p}}$ (10) ${τ}_{2} = \frac{{h}_{{tot}_{2}} ⋅ \left(\frac{2}{L}\right)}{ρ ⋅ {c}_{p}}$ (11) ${τ}_{3} = \frac{{h}_{{tot}_{3}} ⋅ \left(\frac{2}{W}\right)}{ρ ⋅ {c}_{p}}$ (12) ${h}_{{tot}_{1}} = \frac{1}{\frac{1}{{h}_{{tot}_{ext 1}}} + \frac{1}{{h}_{{int}_{1}}}}$ (13) ${h}_{{tot}_{2}} = \frac{1}{\frac{1}{{h}_{{tot}_{ext 2}}} + \frac{1}{{h}_{{int}_{2}}}}$ (14) ${h}_{{tot}_{3}} = \frac{1}{\frac{1}{{h}_{{tot}_{ext 3}}} + \frac{1}{{h}_{{int}_{3}}}}$ (15) ${h}_{{int}_{1}} = \frac{{k}_{p}}{\left(\frac{H}{4}\right)}$ (16) ${h}_{{int}_{2}} = \frac{{k}_{p}}{\left(\frac{L}{4}\right)}$ (17) ${h}_{{int}_{3}} = \frac{{k}_{p}}{\left(\frac{W}{4}\right)}$ (18) ${h}_{{tot}_{ext 1}} = {h}_{{ext}_{natural 1}} ⋅ \left(1-FAN\right) + {h}_{{ext}_{forced 1}} ⋅ \left(FAN\right)$ (19) ${h}_{{tot}_{ext 2}} = {h}_{{ext}_{natural 2}} ⋅ \left(1-FAN\right) + {h}_{{ext}_{forced 2}} ⋅ \left(FAN\right)$ (20) ${h}_{{tot}_{ext 3}} = {h}_{{ext}_{natural 3}} ⋅ \left(1-FAN\right) + {h}_{{ext}_{forced 3}} ⋅ \left(FAN\right)$ (21) ${h}_{{ext}_{natural 1}} = exp \left[\left({a}_{6}⋅ln\left|{T}_{0}-{T}_{c}\right|\right)-\left({a}_{7}⋅lnH\right)+{a}_{8}\right]$ (22) ${h}_{{ext}_{natural 2}} = exp \left[\left({a}_{6}⋅ln\left|{T}_{0}-{T}_{c}\right|\right)-\left({a}_{7}⋅lnL\right)+{a}_{8}\right]$ (23) ${h}_{{ext}_{natural 3}} = exp \left[\left({a}_{6}⋅ln\left|{T}_{0}-{T}_{c}\right|\right)-\left({a}_{7}⋅lnW\right)+{a}_{8}\right]$ (24)

According to experiments:
a₆ = 0.25; ranging from 0.1 to 0.4
a₇ = 0.2501; ranging from 0.1 to 0.5
a₈ = 0.4411; ranging from 0.2 to 0.6
a₆, a₇ and a₈ are constants related to natural heat transfer in the case of an isolated parallelepiped-shaped product, that for a specific embodiment have the above specific values, while for other embodiments they can be within those ranges. ${h}_{{ext}_{forced 1}} = exp \left[\left(-{a}_{9}⋅lnH\right)+{a}_{10}\right]$ (25) ${h}_{{ext}_{forced 2}} = exp \left[\left(-{a}_{9}⋅lnL\right)+{a}_{10}\right]$ (26) ${h}_{{ext}_{forced 3}} = exp \left[\left(-{a}_{9}⋅lnW\right)+{a}_{10}\right]$ (27)

According to experiments:
a₉ = 0.5; ranging from 0.2 to 0.8
a₁₀ = 1.3667; ranging from 1 to 2
a₉ and a₁₀ are constants related to forced heat transfer in the case of an isolated parallelepiped-shaped product that for a specific embodiment have the above specific values, while for other embodiments they can be within those ranges.

### Flat plate (circular) shape:

For an embodiment for which the refrigerated food product has a flat plate shape, the following intermediate functions will be used:
- *h*_{*ext*_{forced1}} : Forced external heat transfer coefficient according to dimension *H* [W/m²·K].
- *h*_{*ext*_{forced2}} : Forced external heat transfer coefficient according to dimension *R* [W/m²·K].
- *h*_{*ext*ₙₐₜᵤᵣₐₗ₁} : Natural external heat transfer coefficient according to dimension *H* [W/m²·K].
- *h*_{*ext*ₙₐₜᵤᵣₐₗ₂} : Natural external heat transfer coefficient according to dimension *R* [W/m²·K].
- *h*_{*tot*ₑₓₜ₁}: Total external heat transfer coefficient according to dimension *H* [W/m²·K].
- *h*_{*tot*ₑₓₜ₂}: Total external heat transfer coefficient according to dimension *R* [W/m²·K].
- *h*_{*int*1}: Food product internal heat transfer coefficient according to dimension *H* [W/m²·K].
- *h*_{*int*2}: Food product internal heat transfer coefficient according to dimension *R* [W/m²·K].
- *h*_{*tot*1}: Overall heat transfer coefficient according to dimension *H* [W/m²·K].
- *h*_{*tot*2}: Overall heat transfer coefficient according to dimension *R* [W/m²·K].
- *τ*: Temperature advance function [1/s], used in equation (2) above, and which, as demonstrated below, is calculated using the data from a previous record.
- *τ*₁: Temperature advance function [1/s] according to dimension *H* [W/m²·K].
- *τ*₂: Temperature advance function [1/s] according to dimension *R* [W/m²·K].

The main of those intermediate functions is calculated according to the following equation: $τ = {τ}_{1} + {τ}_{2}$ (28) *τ* is used in equation (2) above to calculate Δ*T* to finally calculate, by means of equation (1), the temperature *Tₚ* estimated for the refrigerated food product.

The rest of those intermediate functions, which are used to calculate *τ*, are calculated according to the following equations: ${τ}_{1} = \frac{{h}_{{tot}_{1}} ⋅ \left(\frac{2}{H}\right)}{ρ ⋅ {c}_{p}}$ (29) ${τ}_{2} = \frac{{h}_{{tot}_{2}} ⋅ \left(\frac{2}{R}\right)}{ρ ⋅ {c}_{p}}$ (30) ${h}_{{tot}_{1}} = \frac{1}{\frac{1}{{h}_{{tot}_{ext 1}}} + \frac{1}{{h}_{{int}_{1}}}}$ (31) ${h}_{{tot}_{2}} = \frac{1}{\frac{1}{{h}_{{tot}_{ext 2}}} + \frac{1}{{h}_{{int}_{2}}}}$ (32) ${h}_{{int}_{1}} = \frac{{k}_{p}}{\left(\frac{H}{4}\right)}$ (33) ${h}_{{int}_{2}} = \frac{{k}_{p}}{\left(\frac{R}{3}\right)}$ (34) ${h}_{{tot}_{ext 1}} = {h}_{{ext}_{natural 1}} ⋅ \left(1-FAN\right) + {h}_{{ext}_{forced 1}} ⋅ \left(FAN\right)$ (35) ${h}_{{tot}_{ext 2}} = {h}_{{ext}_{natural 2}} ⋅ \left(1-FAN\right) + {h}_{{ext}_{forced 2}} ⋅ \left(FAN\right)$ (36) ${h}_{{ext}_{natural 1}} = exp \left[\left({a}_{11}⋅ln\left|{T}_{0}-{T}_{c}\right|\right)-\left({a}_{12}⋅lnH\right)+{a}_{13}\right]$ (37) ${h}_{{ext}_{natural 2}} = exp \left[\left({a}_{14}⋅ln\left|{T}_{0}-{T}_{c}\right|\right)-\left({a}_{15}⋅{lnR}^{2}\right)+{a}_{16}\right]$ (38)

According to experiments:
a₁₁ = 0.25; ranging from 0.1 to 0.4
a₁₂ = 0.2501; ranging from 0.1 to 0.5
a₁₃ = 0.4411; ranging from 0.2 to 0.6
a₁₄ = 0.2419; ranging from 0.1 to 0.4
a₁₅ = 0.269501; ranging from 0.1 to 0.4
a₁₆ = 0.0341; ranging from 0.01 to 0.06
a₁₁, a₁₂, a₁₃, a₁₄, a₁₅, and a₁₆ are constants related to natural heat transfer in the case of an isolated flat plate-shaped product, that for a specific embodiment have the above specific values, while for other embodiments they can be within those ranges. ${h}_{{ext}_{forced 1}} = exp \left[\left(-{a}_{17}⋅lnH\right)+{a}_{18}\right]$ (39) ${h}_{{ext}_{forced 2}} = exp \left[\left(-{a}_{19}⋅{lnR}^{2}\right)+{a}_{20}\right]$ (40)

According to experiments:
a₁₇ = 0.5; ranging from 0.2 to 0.8
a₁₈ = 1.3667; ranging from 1 to 2
a₁₉ = 0.3839; ranging from 0.2 to 0.6
a₂₀ = 1.882; ranging from 1 to 2.5
a₁₇, a₁₈, a₁₉, and a₂₀ are constants related to forced heat transfer in the case of an isolated flat plate-shaped product, that for a specific embodiment have the above specific values, while for other embodiments they can be within those ranges.

### Cylinder shape:

For an embodiment for which the refrigerated food product has a cylinder shape, the same intermediate functions used for the sphere shape will be used, i.e. *h_{ext_{forced}}*, *h_{extₙₐₜᵤᵣₐₗ}*, *h_{totₑₓₜ}*, *hᵢₙₜ*, *hₜₒₜ*, and *τ*, but calculated according to the following equations: $τ = \frac{{h}_{tot} ⋅ \left(\frac{2}{R}\right)}{ρ ⋅ {c}_{p}}$ (41) *τ* is used in equation (2) above to calculate Δ*T* to finally calculate, by means of equation (1), the temperature *Tₚ* estimated for the refrigerated food product.

The rest of those intermediate functions, which are used to calculate *τ*, are calculated according to the following equations: ${h}_{tot} = \frac{1}{\frac{1}{{h}_{{tot}_{ext}}} + \frac{1}{{h}_{int}}}$ (42) ${h}_{int} = \frac{{k}_{p}}{\left(\frac{R}{3}\right)}$ (43) ${h}_{{tot}_{ext}} = {h}_{{ext}_{natural}} ⋅ \left(1-FAN\right) + {h}_{{ext}_{forced}} ⋅ \left(FAN\right)$ (44) ${h}_{{ext}_{natural}} = exp \left[\left({a}_{21}⋅ln\left|{T}_{0}-{T}_{c}\right.\right)-\left({a}_{22}⋅{lnR}^{2}\right)+{a}_{23}\right]$ (45)

According to experiments:
a₂₁ = 0.2419; ranging from 0.1 to 0.4
a₂₂ = 0.2695; ranging from 0.1 to 0.4
a₂₃ = 0.0341; ranging from 0.01 to 0.06
a₂₁, a₂₂ and a₂₃ are constants related to natural heat transfer in the case of an isolated cylindrical product. that for a specific embodiment have the above specific values, while for other embodiments they can be within those ranges. ${h}_{{ext}_{forced}} = exp \left[\left(-{a}_{24}⋅{lnR}^{2}\right)+{a}_{25}\right]$ (46)

According to experiments:
a₂₄ = 0.3829; ranging from 0.2 to 0.6
a₂₅ = 1.882; ranging from 1 to 3
a₂₄ and a₂₅ are constants related to forced heat transfer in the case of an isolated cylindrical product, that for a specific embodiment have the above specific values, while for other embodiments they can be within those ranges.

For other embodiments of the method of the first aspect of the present invention, also regarding those isolated product variants, but for a food product not coincident with any included in the above mentioned recorded list, by knowing the type of food product, weight (*M*), and dimensions (*L*, *H*, and *W*), its density will be calculated by means of the following equation: $ρ = \frac{M}{\left(H∗L∗W\right)}$

Then, the food product temperature will be calculated as explained above for the product with a parallelepiped shape.

### Boxed products:

Some of the equations used for the above mentioned boxed product variants, according to embodiments of the method of the first aspect of the present invention, are shown below.

In this case, some of the different coefficients, variables and intermediate functions refer to the whole assembly formed by the refrigerated food products, the box (or group of boxes, stacked or not stacked, or pallet), the air existing within the box (or boxes), and, when the refrigerated food products are wrapped with a bag, also of that bag. These are indicated below as related to the assembly.

The following fundamental variables (some have already been identified above) will be used in the following equations:
- *M*: Net weight of the boxed products.
- *e_{c}*: Thickness of the box(es).
- *cₚ*: Specific heat of the food product [J/Kg. K].
- *c_{pA}*: Specific heat of air [J/Kg·K].
- *c_{pB}*: Specific heat of the bag [J/Kg·K] (generally, a plastic bag).
- *c_{pC}*: Specific heat of the box [J/Kg. K].
- *c̅ₚ̅*: Average specific heat of the assembly [J/Kg. K].
- *ρ*: Density of the food product [kg/m³].
- *ρ_{A}*: Density of air [kg/m³].
- *ρ_{B}*: Density of the bag [kg/m³] (generally, a plastic bag).
- *ρ_{C}*: Density of the box [kg/m³].
- *ρ̅ₚ̅*: Average density of the assembly [kg/m³].
- *k_{g}*: Thermal conductivity of the food product [W/m·K].
- *k_{A}*: Thermal conductivity of air [J/Kg·K].
- *k_{B}*: Thermal conductivity of the bag [J/Kg. K] (generally, a plastic bag).
- *k_{C}*: Thermal conductivity of the box [J/Kg. K].
- *H_{b}*: Height [m] of the whole container, whether is formed by only one box, or by a group of boxes, such as a pallet of boxes.
- *L_{b}*: Length [m] of the whole container.
- *W_{b}*: Width/depth [m] of the whole container.
- *FAN*: Forced air convection being provided around the box (or boxes), i.e., when a fan in the refrigerating chamber is on, and is expressed on a per unit basis, from 0 to 1, for the analysed period of time.
- Δ*t:* Recording/sampling frequency, i.e. the time difference between the current time and a previous time. Generally expressed in seconds.
- *T*₀: The temperature of the refrigerated food product calculated for a previous time, i.e. at N-1. For the first sample, when there is no calculation, it is assumed to be equal to the refrigerating chamber temperature.
- Δ*T:* Temperature difference defined as indicated in equation (2) above.
- *T_{c}*: Refrigerating chamber air temperature.
- *Tₚ*: Estimated temperature for the refrigerated food product.

Depending on the embodiment, at least part of the necessary data to be introduced in the following equations, such as some or all of the above fundamental variables, will be provided by a user and/or obtained or assumed from a recorded list of different food products after a step of selecting the food product to be refrigerated.

In contrast to the isolated product variants, for the present boxed product variant, generally, further parameters will have to be manually selected by a user (for example, via a computer interface, such as a touchscreen, of the system of the second aspect of the present invention), for some embodiments, such as the type of food product (such as tuna: same food product parameters obtained as in the example provided above for the isolate product variants), the net weight (*M*) of the boxed products, the material of the box (cardboard, plastic, glass, tin, cork, wood, aluminium and any other material that has available data), and whether the food products are wrapped or not.

The thermophysical properties of containers (box, boxes, pallets), as well as the thicknesses of the different materials, as well as the thermophysical properties of air can all be obtained from that or another recorded list.

For instance, carboard could be selected for the box and the recorded list would provide the following data: *cₚ*= 1900 J/Kg·K, *ρ* = 50 kg/m³, *k_{c}* = 0.1 W/m·K, *e_{c}* = 0.0009 m. A selection of the food products being wrapped could also be done and the recorded list would provide the following data (associated to a Polyethylene plastic bag): *c_{pB}=* 2000 J/Kg·K *ρ_{B}=* 910 kg/m³, *k_{B} =* 0.4 W/m·K. Fo air, the following data could be provided by the recorded list: *c_{pA}=* 1012 J/Kg·K*ρ_{A}*= 1.23 kg/m³, *k_{A}* = 0.024 W/m·K.

The product temperature is built based on the following intermediate functions:
- *V_{P}*: Volume occupied by the food product [m³].
- *V_{B}*: Volume occupied by the bag(s) within the box(es) [m³].
- *V_{C}*: Volume occupied by the walls of the box(es) [m³].
- *V_{A}*: Volume occupied by the air within the box(es) [m³].
- *F_{fill}*: Fill factor: air fraction in the box(es).
- *H_{free}*: Free space in the direction of gravity, i.e. that of *H_{b}* [m]*.*
- *L_{free}*: Free space in a direction perpendicular to that of gravity, namely that of *L_{b}* [m].
- *W_{free}*: Free space in another direction perpendicular to that of gravity, namely that of *W_{b}* [m].
- *R*_{*product*₁}: Thermal resistance according to the direction of *H_{b}.*
- *R*_{*product*₂}: Thermal resistance according to the direction of *L_{b}.*
- *R*_{*product*₃}: Thermal resistance according to the direction of *W_{b}.*
- *R*_{*container*₁}: Thermal resistance of the container, according to the direction of *H_{b}.*
- *R*_{*container*₂}: Thermal resistance of the container, according to the direction of *L_{b}.*
- *R*_{*container*₃}: Thermal resistance of the container, according to the direction of *W_{b}.*
- *R*_{*air*₁}: Thermal resistance of the air within the box(es), according to direction of *H_{b}.*
- *R*_{*air*₂}: Thermal resistance of the air within the box(es), according to direction of *L_{b}.*
- *R*_{*air*₃}: Thermal resistance of the air within the box(es), according to direction of *W_{b}.*
- *h*_{*air*ᵢₙₜₑᵣᵢₒᵣ₁}: Natural external heat transfer coefficient, according to the direction of *H_{b}* [W/m²·K].
- *h*_{*air*ᵢₙₜₑᵣᵢₒᵣ₂}: Natural external heat transfer coefficient, according to the direction of *L_{b}* [W/m²·K].
- *h*_{*air*ᵢₙₜₑᵣᵢₒᵣ₃}: Natural external heat transfer coefficient, according to the direction of *W_{b}* [W/m²·K].
- *R*_{*air*_{convection1}}: Thermal resistance of air to convection in the direction of *H_{b}.*
- *R*_{*air*_{convection2}}: Thermal resistance of air to convection in the direction of *L_{b}.*
- *R*_{*air*_{convection3}}: Thermal resistance of air to convection in the direction of *W_{b}.*
- *R*_{*tot*₁}: Total thermal resistance (series of thermal resistances) in the direction of *H_{b}.*
- *R*_{*tot*₂}: Total thermal resistance (series of thermal resistances) in the direction of *L_{b}.*
- *R*_{*tot*₃}: Total thermal resistance (series of thermal resistances) in the direction of *W_{b}.*
- *K*₁: Thermal conductivity of the assembly [W/m·K] in the direction of *H_{b}.*
- *K*₂: Thermal conductivity of the assembly [W/m·K] in the direction of *L_{b}.*
- *K*₃: Thermal conductivity of the assembly [W/m·K] in the direction of *W_{b}.*
- *h*_{*ext*_{forced1}}: Forced external heat transfer coefficient according to dimension *H_{b}* [W/m²·K].
- *h*_{*ext*_{forced2}}: Forced external heat transfer coefficient according to dimension *L_{b}* [W/m²·K].
- *h*_{*ext*_{forced3}}: Forced external heat transfer coefficient according to dimension *W_{b}* [W/m²·K].
- *h*_{*ext*ₙₐₜᵤᵣₐₗ₁}: Natural external heat transfer coefficient according to dimension *H_{b}* [W/m²·K].
- *h*_{*ext*ₙₐₜᵤᵣₐₗ₂}: Natural external heat transfer coefficient according to dimension *L_{b}* [W/m²·K].
- *h*_{*ext*ₙₐₜᵤᵣₐₗ₃}: Natural external heat transfer coefficient according to dimension *W_{b}* [W/m²·K].
- *h*_{*tot*ₑₓₜ₁}: Total external heat transfer coefficient according to dimension *H_{b}* [W/m²·K].
- *h*_{*tot*ₑₓₜ₂}: Total external heat transfer coefficient according to dimension *L_{b}* [W/m²·K].
- *h*_{*tot*ₑₓₜ₃}: Total external heat transfer coefficient according to dimension *W_{b}* [W/m²·K].
- ${k}_{{h}_{{int}_{1}}}$: Food product internal heat transfer coefficient according to dimension *H_{b}* [W/m²·K].
- ${k}_{{h}_{{int}_{2}}}$: Food product internal heat transfer coefficient according to dimension *L_{b}* [W/m²·K].
- ${k}_{{h}_{{int}_{3}}}$: Food product internal heat transfer coefficient according to dimension *W_{b}* [W/m²·K].
- *h*_{*tot*1}: Overall heat transfer coefficient according to dimension *H_{b}* [W/m²·K].
- *h*_{*tot*2}: Overall heat transfer coefficient according to dimension *L_{b}* [W/m²·K].
- *h*_{*tot*3}: Overall heat transfer coefficient according to dimension *W_{b}* [W/m²·K].
- *τ*: Temperature advance function [1/s], used in equation (2) above, and which, as demonstrated below, is calculated using the data from a previous record.
- *τ*₁: Temperature advance function [1/s] according to dimension *H_{b}* [W/m²·K].
- *τ*₂: Temperature advance function [1/s] according to dimension *L_{b}* [W/m²·K].
- *τ*₃: Temperature advance function [1/s] according to dimension *W_{b}* [W/m²·K].

The main of those intermediate functions is calculated according to the following equation: $τ = {τ}_{1} + {τ}_{2} + {τ}_{3}$ (47) *τ* is used in equation (2) above to calculate Δ*T* to finally calculate, by means of equation (1), the temperature *Tₚ* estimated for the refrigerated food product., in this case for boxed food products

The rest of those intermediate functions, which are used to calculate *τ*, are calculated according to the following equations: ${τ}_{1} = \frac{{h}_{{tot}_{1}} ⋅ \left(\frac{2}{{H}_{b}}\right)}{\overline{ρ} ⋅ \overline{{c}_{p}}}$ (48) ${τ}_{2} = \frac{{h}_{{tot}_{2}} ⋅ \left(\frac{2}{{L}_{b}}\right)}{\overline{ρ} ⋅ \overline{{c}_{p}}}$ (49) ${τ}_{3} = \frac{{h}_{{tot}_{3}} ⋅ \left(\frac{2}{{W}_{b}}\right)}{\overline{ρ} ⋅ \overline{{c}_{p}}}$ (50) ${h}_{{tot}_{1}} = \frac{1}{\frac{1}{{h}_{{tot}_{ext 1}}} + \frac{1}{{k}_{{h}_{{int}_{1}}}}}$ (51) ${h}_{{tot}_{2}} = \frac{1}{\frac{1}{{h}_{{tot}_{ext 2}}} + \frac{1}{{k}_{{h}_{{int}_{2}}}}}$ (52) ${h}_{{tot}_{3}} = \frac{1}{\frac{1}{{h}_{{tot}_{ext 3}}} + \frac{1}{{k}_{{h}_{{int 3}_{1}}}}}$ (53) ${k}_{{h}_{{int}_{1}}} = \frac{{K}_{1}}{\left(\frac{{H}_{b}}{4}\right)}$ (54) ${k}_{{h}_{{int}_{2}}} = \frac{{K}_{2}}{\left(\frac{{L}_{b}}{4}\right)}$ (55) ${k}_{{h}_{{int}_{3}}} = \frac{{K}_{3}}{\left(\frac{{W}_{b}}{4}\right)}$ (56)

The heat transfer coefficients of the assembly are obtained as follows, for some embodiments. ${h}_{{tot}_{ext 1}} = {h}_{{ext}_{natural 1}} ⋅ \left(1-FAN\right) + {h}_{{ext}_{forced 1}} ⋅ \left(FAN\right)$ (57) ${h}_{{tot}_{ext 2}} = {h}_{{ext}_{natural 2}} ⋅ \left(1-FAN\right) + {h}_{{ext}_{forced 2}} ⋅ \left(FAN\right)$ (58) ${h}_{{tot}_{ext 3}} = {h}_{{ext}_{natural 3}} ⋅ \left(1-FAN\right) + {h}_{{ext}_{forced 3}} ⋅ \left(FAN\right)$ (59) Where: ${h}_{{ext}_{forced 1}} = exp \left[\left(-0.5⋅{lnH}_{b}\right)+{a}_{26}\right]$ (60) ${h}_{{ext}_{forced 2}} = exp \left[\left(-0.5⋅{lnL}_{b}\right)+{a}_{26}\right]$ (61) ${h}_{{ext}_{forced 3}} = exp \left[\left(-0.5⋅{lnW}_{b}\right)+{a}_{26}\right]$ (62) ${h}_{{ext}_{natural 1}} = exp \left[\left({a}_{27}⋅ln\left|{T}_{0}-{T}_{c}\right|\right)-{a}_{28}⋅ln {H}_{b}+{a}_{29}\right]$ (63) ${h}_{{ext}_{natural 2}} = exp \left[\left({a}_{27}⋅ln\left|{T}_{0}-{T}_{c}\right|\right)-{a}_{28}⋅ln {L}_{b}+{a}_{29}\right]$ (64) ${h}_{{ext}_{natural 3}} = exp \left[\left({a}_{27}⋅ln\left|{T}_{0}-{T}_{c}\right|\right)-{a}_{28}⋅ln {W}_{b}+{a}_{29}\right]$ (65)

According to experiments:
a₂₆ = 1.3667; ranging from 0.5 to 2.5
a₂₇ = 0.25; ranging from 0.1 to 0.4
a₂₈ = 0.2501; ranging from 0.1 to 0.4
a₂₉ = 0.4411; ranging from 0.2 to 0.7
a₂₆ to a₂₉ are constants related to external forced and natural heat transfer in the case of a boxed product, that for a specific embodiment have the above specific values, while for other embodiments they can be within those ranges.

For the natural internal heat transfer coefficient according to the respective three dimensions, measured in W/m²K, when the refrigerated food product is not wrapped (when wrapped, the following coefficients are zero) : ${h}_{{air}_{interior 1}} = exp \left[\left({a}_{30}⋅ln\left|{T}_{0}-{T}_{c}\right|\right)-{a}_{31}\right]$ (66) ${h}_{{air}_{interior 2}} = exp \left[\left({a}_{32}⋅ln\left|{T}_{0}-{T}_{c}\right|\right)-{a}_{33}-{a}_{34}⋅ln {L}_{free}\right]$ (67) ${h}_{{air}_{interior 3}} = exp \left[\left({a}_{32}⋅ln\left|{T}_{0}-{T}_{c}\right|\right)-{a}_{33}-{a}_{34}⋅ln {W}_{free}\right]$ (68)

According to experiments:
a₃₀ = 0.3333; ranging from 0.1 to 0.6
a₃₁ = 0.3369; ranging from 0.1 to 0.6
a₃₂ = 0.178; ranging from 0.05 to 0.4
a₃₃ = 0.466; ranging from 0.2 to 0.7
a₃₄ = 0.2469; ranging from 0.1 to 0.4
a₃₀ to a₃₄ are constants related to natural internal heat transfer in the case of a boxed product, that for a specific embodiment have the above specific values, while for other embodiments they can be within those ranges.

*K*₁, *K*₂ and *K*₃ are obtained by means of the following equations, for some embodiments: ${K}_{1} = \frac{{H}_{b}}{{L}_{b} ⋅ {W}_{b} ⋅ {R}_{{tot}_{1}}}$ (69) ${K}_{2} = \frac{{H}_{b}}{{H}_{b} ⋅ {W}_{b} ⋅ {R}_{{tot}_{2}}}$ (70) ${K}_{3} = \frac{{H}_{b}}{{H}_{b} ⋅ {L}_{b} ⋅ {R}_{{tot}_{3}}}$ (71)

Where *R*_{*tot*1}, *R*_{*tot*2} and *R*_{*tot*3} will be obtained as will be explained below, for some embodiments

Some volume functions must be used to obtain the volume of the assembly: ${V}_{P} = \frac{M}{{ρ}_{p}}$ (72) ${V}_{C} = \left(2{H}_{b}{L}_{b}+2{H}_{b}{W}_{b}+2{W}_{b}{L}_{b}\right) ⋅ {e}_{c}$ (73)

If the product is wrapped, i.e. such as within a plastic bag: ${V}_{B} = \frac{{H}_{b} {L}_{b} {W}_{b} - {V}_{P} - {V}_{C}}{100 ⋅ 0.4}$ (74)

Else, i.e. if the product is not wrapped: ${V}_{B} = 0$ (75)

For all cases (wrapped or not wrapped): ${V}_{A} = {H}_{b} {L}_{b} {W}_{b} - {V}_{P} - {V}_{C} - {V}_{B}$ (76)

Fill factors and free lengths are obtained as follows, for some embodiments: ${F}_{fill} = 1 - \frac{{V}_{a}}{{H}_{b} {L}_{b} {W}_{b}}$ (77) ${H}_{free} = {H}_{b} ⋅ {F}_{fill}^{1 / 3}$ (78) ${L}_{free} = {L}_{b} ⋅ {F}_{fill}^{1 / 3}$ (79) ${W}_{free} = {W}_{b} ⋅ {F}_{fill}^{1 / 3}$ (80)

The average density and specific heat are obtained as follows, for some embodiments: $\overline{ρ} = \frac{M + {V}_{B} ⋅ {ρ}_{b} + {V}_{C} ⋅ {ρ}_{c} + {V}_{A} ⋅ {ρ}_{a}}{{V}_{P} + {V}_{C} + {V}_{B} + {V}_{A}}$ (81) $\overline{{c}_{p}} = \frac{{c}_{{p}_{p}} ⋅ M + {c}_{{p}_{B}} ⋅ {V}_{B} ⋅ {ρ}_{b} + {c}_{{p}_{C}} ⋅ {V}_{C} ⋅ {ρ}_{c} + {c}_{{p}_{A}} ⋅ {V}_{A} ⋅ {ρ}_{a}}{M + {V}_{B} ⋅ {ρ}_{b} + {V}_{C} ⋅ {ρ}_{c} + {V}_{A} ⋅ {ρ}_{a}}$ (82)

The thermal resistances of the assembly are obtained as follows, for some embodiments.

For the refrigerated food products: ${R}_{{product}_{1}} = \frac{{H}_{b}}{\left(\frac{{V}_{P}}{{H}_{b} ⋅ {k}_{p}}\right)}$ (83) ${R}_{{product}_{2}} = \frac{{L}_{b}}{\left(\frac{{V}_{P}}{{L}_{b} ⋅ {k}_{p}}\right)}$ (84) ${R}_{{product}_{3}} = \frac{{W}_{b}}{\left(\frac{{V}_{P}}{{W}_{b} ⋅ {k}_{p}}\right)}$ (85)

For the box (or group of boxes or pallet): ${R}_{{container}_{1}} = \frac{{e}_{c}}{{L}_{b} ⋅ {W}_{b} ⋅ {k}_{c}}$ (86) ${R}_{{container}_{2}} = \frac{{e}_{c}}{{H}_{b} ⋅ {W}_{b} ⋅ {k}_{c}}$ (87) ${R}_{{container}_{3}} = \frac{{e}_{c}}{{H}_{b} ⋅ {L}_{b} ⋅ {k}_{c}}$ (88)

For the air existing within the box: ${R}_{{air}_{1}} = \frac{{H}_{b}}{\left(\frac{{V}_{a}}{{H}_{b} ⋅ {k}_{a}}\right)}$ (89) ${R}_{{air}_{2}} = \frac{{L}_{b}}{\left(\frac{{V}_{a}}{{L}_{b} ⋅ {k}_{a}}\right)}$ (90) ${R}_{{air}_{3}} = \frac{{W}_{b}}{\left(\frac{{V}_{a}}{{W}_{b} ⋅ {k}_{a}}\right)}$ (91)

If the product is wrapped, such as within a plastic bag: ${R}_{{tot}_{1}} = \frac{2 {R}_{{container}_{1}} + \left({R}_{{product}_{1}}⋅{R}_{{air}_{1}}\right)}{{R}_{{product}_{1}} ⋅ {R}_{{air}_{1}}}$ (92) ${R}_{{tot}_{2}} = \frac{2 {R}_{{container}_{2}} + \left({R}_{{product}_{2}}⋅{R}_{{air}_{2}}\right)}{{R}_{{product}_{2}} ⋅ {R}_{{air}_{2}}}$ (93) ${R}_{{tot}_{3}} = \frac{2 {R}_{{container}_{3}} + \left({R}_{{product}_{3}}⋅{R}_{{air}_{3}}\right)}{{R}_{{product}_{3}} ⋅ {R}_{{air}_{3}}}$ (94)

However, if the product is not wrapped, i.e. the refrigerated food products are directly housed within the box (or group of boxes):
If not wrapped and *Tₚ > T_{c}* then: ${R}_{{tot}_{1}} = \frac{2 {R}_{{container}_{1}} + \left({R}_{{product}_{1}}⋅{R}_{{air}_{convection 1}}\right)}{{R}_{{product}_{1}} ⋅ {R}_{{air}_{convection 1}}}$ (95) ${R}_{{tot}_{2}} = \frac{{2 R}_{{container}_{2}} + \left({R}_{{product}_{2}}⋅{R}_{{air}_{convection 2}}\right)}{{R}_{{product}_{2}} ⋅ {R}_{{air}_{convection 2}}}$ (96) ${R}_{{tot}_{3}} = \frac{2 {R}_{{container}_{3}} + \left({R}_{{product}_{3}}⋅{R}_{{air}_{convection 3}}\right)}{{R}_{{product}_{3}} ⋅ {R}_{{air}_{convection 3}}}$ (97)

If not wrapped and *Tₚ* ≤ *T_{c}* then: ${R}_{{tot}_{1}} = \frac{2 {R}_{{container}_{1}} + \left({R}_{{product}_{1}}⋅{R}_{{air}_{1}}\right)}{{R}_{{product}_{1}} ⋅ {R}_{{air}_{1}}}$ (98) ${R}_{{tot}_{2}} = \frac{2 {R}_{{container}_{2}} + \left({R}_{{product}_{2}}⋅{R}_{{air}_{2}}\right)}{{R}_{{product}_{2}} ⋅ {R}_{{air}_{2}}}$ (99) ${R}_{{tot}_{3}} = \frac{2 {R}_{{container}_{3}} + \left({R}_{{product}_{3}}⋅{R}_{{air}_{3}}\right)}{{R}_{{product}_{3}} ⋅ {R}_{{air}_{3}}}$ (100) Where: ${R}_{{air}_{convection 1}} = \frac{1}{{h}_{{air}_{interior 1}} ⋅ \frac{{V}_{A}}{{H}_{b}}}$ (101) ${R}_{{air}_{convection 2}} = \frac{1}{{h}_{{air}_{interior 2}} ⋅ \frac{{V}_{A}}{{L}_{b}}}$ (102) ${R}_{{air}_{convection 3}} = \frac{1}{{h}_{{air}_{interior 3}} ⋅ \frac{{V}_{A}}{{W}_{b}}}$ (103)

Then, for some embodiments of the method of the first aspect of the present invention, the following parameters need to be manually input a by a user:
- For the isolated product variants: type of food product (such as tuna), and, for a food product not coincident with any included in any recorded list, also the weight, and dimensions of the food product.
- For the boxed product variants: type of food product, net weight of the boxed products, dimensions of the assembly, material of the box(es), and whether the food products are wrapped or not.

For other embodiments, some or all of those parameters could be automatically selected, for example, by means of operatively interconnected automatic devices of the system of the second aspect of the invention, such as vision recognition devices, weighting devices, etc.

In a second aspect, the present invention relates to a system for estimating the temperature of a refrigerated food product placed in a refrigerating chamber, the system comprising:
- a refrigerating chamber for housing said refrigerated food product;
- at least one temperature sensor for performing and recording a plurality of measurements of at least the temperature of the environment at which said refrigerated food product is exposed at least at a given time, at least when placed within said refrigerating chamber; and
- computing means operatively connected to said at least one temperature sensor for receiving that plurality of measurements, and configured for computing data representative of said plurality of measurements using one or more convection heat transfer models including one or more natural convection heat transfer models for estimating temperature values for the refrigerated food product and providing the temperature values estimated.

The system of the third aspect of the present invention is adapted to implement the method of the first aspect, for any of its embodiments, specifically step a) with the at least one temperature sensor, step b) with the computing means, and step c) with the computing means and, in some cases, also with the collaboration of an appropriate device for providing the temperature values estimated, such as a display, speaker, haptic device, etc.

For an embodiment, the system of the second aspect of the present invention is deployed on a cloud-based loT system for monitoring the cold chain along which the refrigerated product is distributed.

In a third aspect, the present invention relates to a computer program for estimating the temperature of a refrigerated food product placed in a refrigerating chamber, including program instructions that, when executed in a processor (such as that of the computing means of the system of the second aspect of the present invention), implement the method of the first aspect of the present invention, for any of its embodiments.

### Brief Description of the Drawings

The previous and other advantages and features will be better understood from the following detailed description of embodiments, with reference to the attached drawings, which must be considered in an illustrative and non-limiting manner, in which:

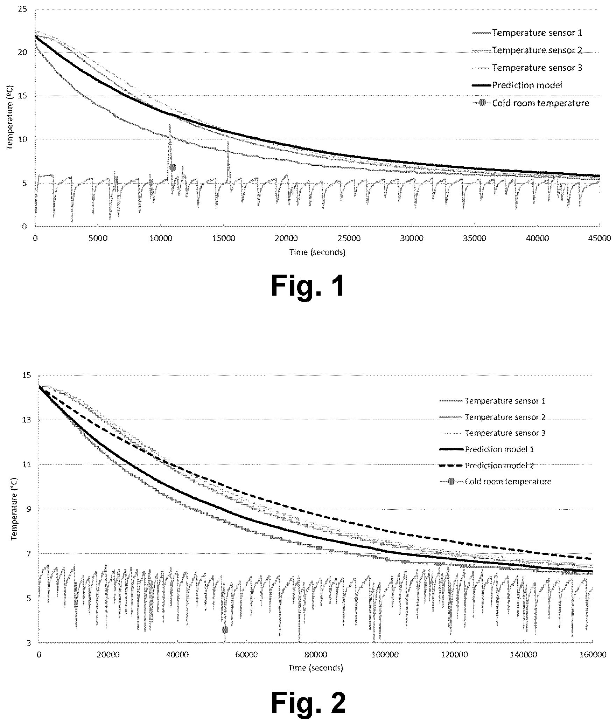

Figure 1. Time vs. temperature during refrigeration of a cooked ham (case study 1). Temperatures correspond to the temperature on the surface (Temperature sensor 1), temperatures measured at a characteristic distance (Temperature sensor 2 and 3), the temperature of air near the product (Cold room temperature) and the temperature predicted by the model (Prediction model implemented by the method of the present invention, for an embodiment).
Figure 2. Time vs temperature during refrigeration of apples stored in a closed plastic box (case study 2). Temperatures correspond to the temperature on the surface (Temperature sensor 1), temperatures measured at a characteristic distance (Temperature sensor 2 and 3), the temperature of air near the product (Cold room temperature) and the temperature predicted by the model implemented by the method of the present invention, for an embodiment considering internal natural convection (Prediction model 1) and for an embodiment considering conduction through air (Prediction model 2).

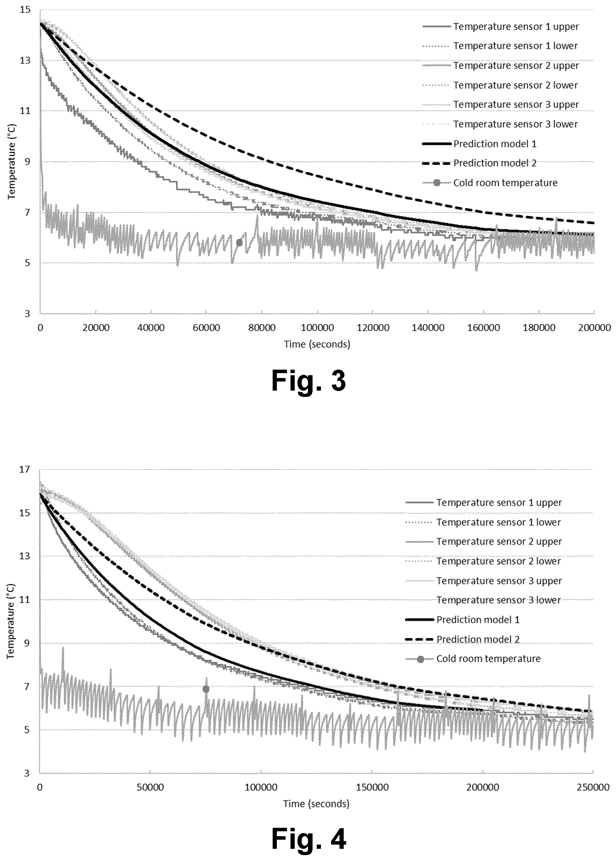

Figure 3. Time vs temperature during refrigeration of apples stored in two closed carboard boxes (case study 3). Temperatures correspond to the temperature on the surface of the upper (Temperature sensor 1 upper) and lower boxes (Temperature sensor 2 upper), temperatures measured at a characteristic distance in the upper and lower boxes (Temperature sensor 2 upper/lower and 3 upper/lower), the temperature of air near the product (Cold room temperature) and the temperature predicted by the model implemented by the method of the present invention, for an embodiment considering internal natural convection (Prediction model 1) and for an embodiment considering conduction through air (Prediction model 2).
Figure 4. Time vs temperature during refrigeration of apples wrapped in plastic stored in two closed carboard boxes (case study 4). Temperatures correspond to the temperature on the surface of the upper (Temperature sensor 1 upper) and lower boxes (Temperature sensor 2 upper), temperatures measured at a characteristic distance in the upper and lower boxes (Temperature sensor 2 upper/lower and 3 upper/lower), the temperature of air near the product (Cold room temperature) and the temperature predicted by the model implemented by the method of the present invention, for an embodiment considering internal natural convection (Prediction model 1) and for an embodiment considering conduction through air (Prediction model 2).

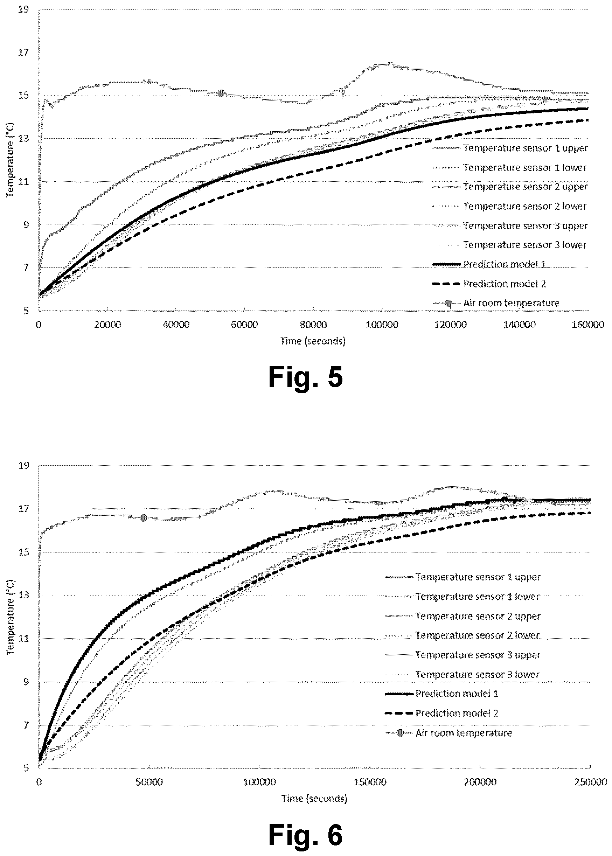

Figure 5. Time vs temperature of apples stored at room temperature in two closed carboard boxes after refrigeration (case study 5). Temperatures correspond to the temperature on the surface of the upper (Temperature sensor 1 upper) and lower boxes (Temperature sensor 2 upper), temperatures measured at a characteristic distance in the upper and lower boxes (Temperature sensor 2 upper/lower and 3 upper/lower), the temperature of air near the product (Cold room temperature) and the temperature predicted by the model implemented by the method of the present invention, for an embodiment considering internal natural convection (Prediction model 1) and for an embodiment considering conduction through air (Prediction model 2).
Figure 6. Time vs temperature of apples wrapped in plastic stored at room temperature in two closed carboard boxes after refrigeration (case study 6). Temperatures correspond to the temperature on the surface of the upper (Temperature sensor 1 upper) and lower boxes (Temperature sensor 2 upper), temperatures measured at a characteristic distance in the upper and lower boxes (Temperature sensor 2 upper/lower and 3 upper/lower), the temperature of air near the product (Cold room temperature) and the temperature predicted by the model implemented by the method of the present invention, for an embodiment considering internal natural convection (Prediction model 1) and for an embodiment conduction through air (Prediction model 2).

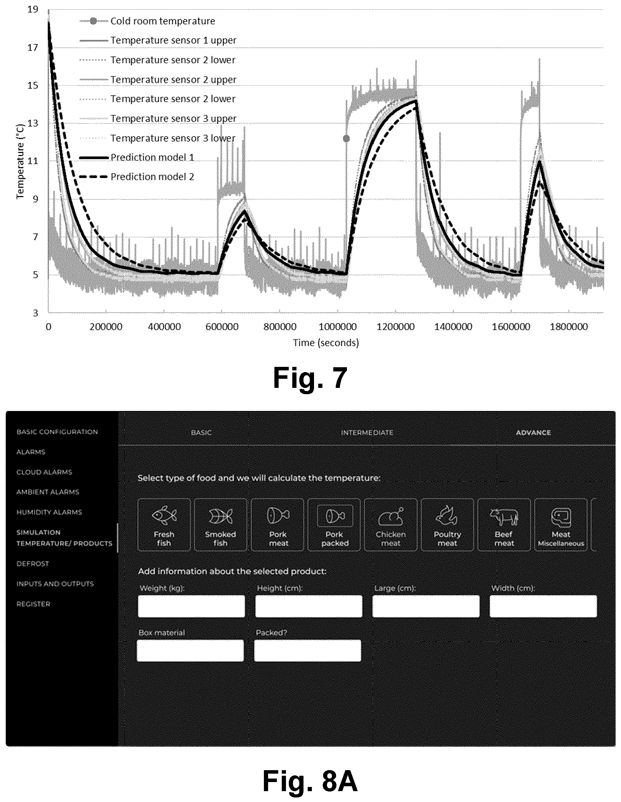

Figure 7 Time vs temperature during refrigeration with different temperature excursions of apples stored in three closed carboard boxes (case study 7). Temperatures correspond to the temperature on the surface of the upper (Temperature sensor 1 upper) and middle boxes (Temperature sensor 2 upper), temperatures measured at a characteristic distance in the upper and middle boxes (Temperature sensor 2 upper/lower and 3 upper/lower), the temperature of air near the product (Cold room temperature) and the temperature predicted by the model implemented by the method of the present invention, for an embodiment considering internal natural convection (Prediction model 1) and for an embodiment conduction through air (Prediction model 2).

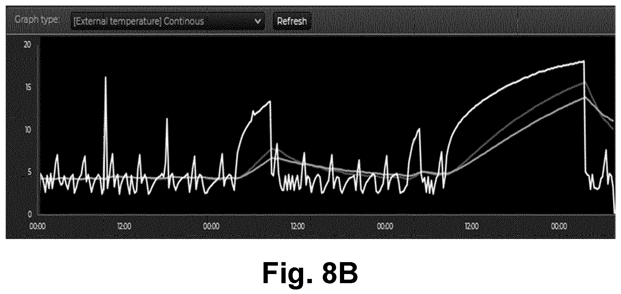

Figures 8A and 8B respectively show two screenshots shown in a display of the system of the second aspect of the present invention, for an embodiment for which the system is a cold chain monitoring IoT system equipped with NB loT temperature sensors. Particularly, Figure 8A shows what is shown in that display for allowing a user to introduce the inlet parameters related to the type of food product, weight, dimensions, box material and packaging of the food product(s) which temperature is desired to be estimated, while figure 8B shows the results of that estimation presented in that display, particularly in the form of a temperature history for 20kg and 40 kg carboard boxes full of apples.

### Detailed Description of Several Embodiments

Some experiments and estimations, according to the method of the first aspect of the present invention, have been carried out by the present inventors to demonstrate the goodness and efficiency of the present invention, for any of its aspects. These experiments are described in detail below.

The equations described in a previous section have been used to estimate the temperature of the refrigerated food products, where constants a₁ to a₃₄ have been assigned with the specific values indicated in a previous section of this document.

### Description of experimental setting:

A food product was stored in a cold room with 3m x 2m x 3m (Height x Length x Depth) at a temperature of 5 ± 0.5°C and a humidity rate of 55 ± 5 % was kept in the room.

The air velocity near the product was measured with a datalogger - connected to an air velocity omnidirectional probe -at different points near the package and was determined to be around 1 m/s when the evaporator fan was blowing. When the fan was off, natural convection was considered. The controller of the chamber registered when the fan was functioning and this data was used to estimate the *FAN* parameter for the model implemented by the method of the present invention.

The products used in the trials were taken from the refrigeration chamber and were placed at room temperature for 48h to guarantee that all points had the same temperature at the beginning of the process. During simulation of temperature excursions and warming trials, the package was taken from the refrigeration chamber and was kept at room temperature (no control temperature). Room temperature changed over time; this explains differences in initial temperatures for the experiments.

### Temperature measurement:

Thermocouples temperature sensors connected to a temperature datalogger (accuracy ± 0.32 °C) were used to record the air and product temperature. Three sensors were inserted into the core of three products located at i) at the wall of the package (Temperature sensor 1), ii) at approximately the characteristic distance (L/4) from the walls of the package (Temperature sensor 2) and iii) the centre of the package (Temperature sensor 3). One more sensor measured the air temperature always located near the package being monitored (Cold room temperature). In case two or more boxes were used, the sensors were located at the same position for the upper and the middle box. The temperature was recorded every 30 seconds and recorded on a datalogger until the end of the process. Data was downloaded at the end of the process. At each recording step the model implemented by the method of the present invention was used to estimate the temperature of the product.

### Case studies:

The method of the first aspect of the present invention has been evaluated in seven different case studies and in two different products (cooked ham and apples) (Table 1). Case studies range from a simple setting (case study 1) for a product with homogeneous characteristics (cooked ham) to a more complex setting with wrapped and unwrapped apples stacked in different types and number of boxes. Apples were selected as a representative product (shape and size) for the development of the model implemented by the method of the present invention and the study of internal natural heat transfer though the existing air voids of stacked foodstuffs.

Case study 2 evaluates the model implemented by the method of the present invention in unwrapped stacked apples placed in a single plastic box during cooling. In this set-up, with unwrapped stacked apples, the internal natural heat transfer (Prediction model 1) should be assumed as air can flow through the air voids. Case studies 3 and 4 evaluate the model implemented by the method of the present invention in two stacked cardboard boxes with wrapped and unwrapped apples. For the wrapped apples in plastic the conduction model (Prediction model 2) should be evaluated instead of internal natural heat transfer. Case studies 5 and 6, the same settings for case studies 3 and 4 are evaluated during warming at room temperature. Finally in case study 7, three stacked cardboard boxes with apples are evaluated during cold storage, simulating different temperature excursions.

For case studies 2,3,5 and 7 in which the product is unwrapped and internal natural heat transfer is considered, heat conduction through air instead of natural heat transfer in the model was also evaluated for comparison purposes. Similarly, for case studies 4 and 6 with wrapped product internal natural heat transfer is considered instead of heat conduction through air. For arrangements of two or more boxes the system was considered as a single box with height being equal to the sum of the heights of each box.

**Table 1. Description of case studies**

| Case study | Product | Product arrangement | Wrapped | Internal heat transfer model |
|---|---|---|---|---|
| 1 | Cooked ham | Single element | No | Conduction |
| 2 | Apples | 1 box | No | Convection |
| 3 | Apples | 2 stacked boxes | No | Convection |
| 4 | Apples | 2 stacked boxes | Yes | Conduction |
| 5 | Apples | 2 stacked boxes | No | Convection |
| 6 | Apples | 2 stacked boxes | Yes | Conduction |
| 7 | Apples | 3 stacked boxes | No | Convection |

### Product characteristics:

A cooked ham (case study 1) of 0.07 m x 0.14 m X 0.19 m (Height x Length x Depth) with an approximate weight of 1.9 kg was used in the experiments. Specific heat and density were obtained from Oliveira at al. (2005) (Table 2).

Fuji Apples were bought at a local grocery store. Apples had an approximate diameter of 0.07 m. Apples with a total weight of 27 kg were placed in a HDPE plastic box (Gilac, France) of 0.23 m x 0.6 m x 0.4 m (Height x Length x Depth) with a wall thickness of 3 mm (case study 2) resulting in a free-space factor of 0.53. For case studies 3-6, two stacked cardboard boxes of 0.21 m x 0.32 m 0.34 m each with a wall thickness of 3 mm were used, each box containing 10.9 kg of apples with a free-space factor of 0.548. For case study 7, three stacked cardboard boxes of 0.255 m x 0.26 m x 0.38 m each were used and each box contained 10.6 kg of apples with a free-space factor of 0.604.

Specific heat and density for the apples were obtained from ASHRAE (2006) and for the plastic box data was taken from https://www.matweb.com and for the cardboard box from Kucharek et al. (2020). For the air the information was taken from air property tables publicly available.

**Table 2. Physical properties of materials used in the experiments**

| Product | Density (*ρ*) (kg/m3) | Specific heat (*cₚ*) (J/(kgK)) | Heat conductivity (*k*) (W/mK) |
|---|---|---|---|
| Cooked ham | 1012 | 3540 | 0.46 |
| Apples | 1084 | 3720 | 0.418 |
| Plastic box | 953 | 1820 | 0.428 |
| Carboard box | 940 | 1400 | 0.061 |
| Air | 1.23 | 1092 | 0.024 |

### Model evaluation:

The performance of the model implemented by the method of the present invention was evaluated using the half cooling (warming) time. It is defined as the time needed to lower the temperature difference between the product and the surrounding air to one-half of the initial temperature difference between the food product and the air. Absolute and relative errors were computed for this parameter.

The error between the experimental and predicted temperature was calculated using the average relative error in percentage terms: $\frac{1}{N} {\sum }_{i = 1}^{N} \frac{abs \left({T}_{pred}^{i}-{T}_{exp}^{i}\right)}{{T}_{pred}^{i}} \times 100$ and the average absolute error in percentage term: $\frac{1}{N} {\sum }_{i = 1}^{N} abs \left({T}_{pred}^{i}-{T}_{exp}^{i}\right) \times 100$ Where ${T}_{pred}^{i}$ and ${T}_{exp}^{i}$ are the predicted temperatures by the model and the experimental temperatures at step time i. N is the total number of time steps. ${T}_{exp}^{i}$ is calculated as the average temperature of the all the temperature probes used in the experiment.

### Results and discussion:

### - General results:

**Table 3. Model performance for different case studies**

| Case Study | Model | Predicted half cooling time (hours) | Experimental half cooling time (hours) | % absolute half cooling time error | Absolute half cooling time error (hours) | % absolute temperature error | Absolute temperature error (ºC) |
|---|---|---|---|---|---|---|---|
| 1 | 2 | 2.59 | 2.83 | 9.27 | 0.24 | 4.78 | 0.27 |
| 2 | 1 | 10.83 | 14.01 | 29.36 | 3.18 | 6.42 | 0.58 |
| 3 | 1 | 11.41 | 11.99 | 5.08 | 0.58 | 2.22 | 0.19 |
| 4 | 2 | 16.65 | 19.08 | 14.59 | 2.43 | 3.67 | 0.38 |
| 5 | 1 | 13.40 | 13.49 | 0.67 | 0.09 | 2.09 | 0.23 |
| 6 | 2 | 17.12 | 17.98 | 5.02 | 0.86 | 5.35 | 0.65 |
| 7 | 1 | - | - | - | - | 5.96 | 0.39 |

Results show that the temperature predicted by the model implemented by the method of the present invention and the experimental temperature are in good agreement for the different cases considered, as can be seen by the small differences between experimental data and the model output (Table 3). In general, the model tends to overestimate cooling and heating rate in the first hours of the process (Figs. 1-7). The reason for this divergence could lie in the fact that the approach developed by Van der Smann (2003) "Simple model for estimating heat and mass transfer in regular-shaped foods. Journal of Food Engineering, 60, 383-390, assumes that the points located at the characteristic distance reaches the average temperature after a certain time. In this study this assumption was applied from the very beginning of the warming/cooling process. In fact, some experimental models assume a lag between the beginning of the cooling and the onset of the decrease in the temperature of the product (Cleland et al., 1990, "Food refrigeration processes: Analysis, design and simulation". Elsevier Science, London.).

This is corroborated by the experimental results, as the temperature do not start to fall/rise immediately after changing the storage conditions. The model implemented by the method of the present invention, for the present embodiments, is not able to model this behaviour and this may account for some of the discrepancies between experimental data and model output. Other factors explaining these differences is the assumption that the base of the box is in contact with the surrounding air and the same heat transfer is assumed as for the other faces. Another factor that may affect the external heat transfer and that may be difficult to determine is the actual heat transfer coefficient for each of the faces. The model implemented by the method of the present invention, for the present embodiments, considers that the heat transfer coefficient is the same for each face and is calculated from the measured air velocity. However, depending on the flow direction of the air, these values may differ in some degree from face to face and the average value used in the calculations may not be representative of the actual heat transfer coefficient for each face. Some faces may not be affected by the flow of air, and the heat transfer coefficient could be much lower. Thus, different heat transfer coefficients should be calculated for each individual face. However, this can be difficult and time consuming and is not feasible for a general model as the one proposed in this study for an IoT system, as it is not feasible to configure details concerning every single item stored in the cold room. When results are compared to those obtained by Raval et al. (2013), for a finite slab, half cooling time tends to show similar results. In general, errors tend to be moderate or low for most of the cases.

Simple case studies, 1 and 2, show a good agreement with the experimental results (Figs. 1 and 2). In case study 1 (cooked ham), the simplest case is evaluated where the conductivity can be considered homogeneous across the product. Results show a small difference in the estimation error for half cooling time and error for temperature prediction, 0.24h and 0.27°C, respectively. This result proves that the model implemented by the method of the present invention works for the simplest scenario. Case study 2, corresponds to a more complex setting, where the product is placed in a plastic box with air voids and is not wrapped in plastic. In this case internal natural convection is assumed and the model implemented by the method of the present invention also shows a good agreement with the experimental data, even though the model is not so accurate as for case study 1.

Case studies 3 to 7 show that changing the material, size and number of boxes do not affect the estimation performance of the model implemented by the method of the present invention (Figs. 3-7). Model errors tend to be lower for case studies in which product is not wrapped in plastic and internal natural convection heat transfer is considered than for study cases in which heat transfer through air (by conduction) is assumed. In the experimental results, slight differences are observed between the upper and lower boxes temperatures. Upper boxes tend to cool down faster than lower boxes, whereas during warming, temperatures tend to be similar. Upper boxes are probably subjected to higher degree of heat transfer because of the faces available for heat transfer. However, these differences are small and do not significantly affect the performance of the model implemented by the method of the present invention.

Case studies 3-4 (Figs. 2-3) and 5-6 (Fig. 4-5) show the impact of having the product wrapped in plastic. Experimental results show a reduction in the experimental half cooling and warming time of around 40% and 25% if plastic is not used. Although the thermal resistance of the plastic is negligible due to small thickness of the material, the impact is very significant as it reduces the rate of temperature increase/decrease. Thus, these differences can only be explained by the internal natural flow of air due to temperature differences between the product and the walls in case the air is able to flow through the air voids. Moreover, the lower reduction in half cooling (warming) time during warming with respect to cooling might be explained by the fact that in z-axis (vertical axis) internal natural convection only occurs when the air temperature is lower than the temperature of the product (Globe and Dropkin, 1959), that is, during cooling, as detailed in the model description.

For the case study 7 (Fig. 7), in which the model implemented by the method of the present invention is tested for three boxes during cooling and temperature excursions in storage, results also show a good agreement between the predicted temperature values and the experimental data. These results corroborate the good performance of the model implemented by the method of the present invention for predicting temperature changes during storage, in situations where the temperature may change up and down over time.

### - Impact of internal natural convection on model performance:

**Table 4. Model performance for case studies in which the conduction model (prediction model 2) has been applied instead of the internal natural convection (prediction model 1)**

| Case Study | Predicted half cooling time (hours) | Experimental half cooling time (hours) | % absolute half cooling time error | Absolute half cooling time error | % absolute temperature error | Absolute temperature error (ºC) |
|---|---|---|---|---|---|---|
| 2 | 15.53 | 14.01 | 9.79 | 1.52 | 4.74 | 0.41 |
| 3 | 16.59 | 11.99 | 27.73 | 4.60 | 10.27 | 0.86 |
| 5 | 17.82 | 13.49 | 24.29 | 4.33 | 6.34 | 0.76 |
| 7 | - | - | - | - | 11.48 | 0.87 |

**Table 5. Model performance for case studies in which internal natural convection (model 1) has been applied instead of the conduction model (model 2)**

| Case Study | Predicted half cooling time (hours) | Experimental half cooling time (hours) | % absolute half cooling time error | Absolute half cooling time error | % absolute temperature error | Absolute temperature error (ºC) |
|---|---|---|---|---|---|---|
| 4 | 11.73 | 19.08 | 62.65 | 7.35 | 14.06 | 1.25 |
| 6 | 12.76 | 17.98 | 40.9 | 5.22 | 7.63 | 0.83 |

If conduction through air is assumed instead of natural convection for case studies 2, 4 and 6 results differ depending on the case study (Table 4). In case study 2, the errors of the model in the estimation of the half cooling time and temperature shows better results for the model using conduction through air instead of internal natural convection (1.52h vs. 3.18h and 0.41°C vs 0.58°C). At first sight, this result seems to show that the approach of assuming an internal natural convection does not improve the accuracy of the model. However, the graph (Fig. 1) shows that the model incorporating the internal natural convection overestimates the cooling rate at the beginning of the cooling process as expected. Using conduction through air, the experimental data is much better predicted at the beginning of the cooling process. However, this is not the expected behaviour of the model and later in time the model tends to diverge from the experimental data, indicating that the model is underestimating the cooling rate and as a result the model seems to agree better with the experimental data at the beginning. However, for internal natural convection, the model tends to predict with better accuracy the experimental data after some time, indicating that the model in estimating correctly the cooling rate.

For study cases 3 and 5 when assuming conduction through air heat transfer, results show a much worse agreement with the experimental results (absolute errors of 0.86 °C and 0.76 °C vs. 0.19 °C and 0.23 °C). Similarly, the predicted half cooling time is very close to the value obtained experimentally when assuming internal convection heat transfer (absolute errors of 0.58 h and 0.09 h), whereas when assuming conduction through air results tend to overestimate the experimental values by a large margin (4.60 h and 4.33 h), indicating that the assumption of conduction through air voids tends to underpredict significantly the cooling rate of the package (Figs. 3 and 5). Similar results have been also obtained for case study 7 (0.87h vs 0.39h).

For the case of having the product wrapped in plastic, case studies 4 and 6, results (Table 5) show that the model tends to underestimate the half cooling/warming time when considering only conductivity of the air (Figs. 4 and 6), especially for case study 4 (2.43 h). This difference may be explained by the assumptions used to estimate the equivalent conductivity of the product and air. However, these differences are not excessive as it shows the average temperature errors for both cases (0.38 °C and 0.65 °C), and the results show that a simplified model can be used to estimate the temperature in these case scenarios. When the model considering internal natural heat transfer is applied in these two cases studies, for the case 4, the model error increases considerably, for half cooling time (7.35 h) and for absolute temperature error (1.25 °C). For case study 6 the increase in the model error is smaller (5.22 h and 0.83 °C). This result may be explained by the fact that heat transfer in the z-axis is assumed to be conduction when the external temperature is higher than the product temperature as in this case. Therefore, the impact of assuming internal natural heat transfer on the model is more limited as it only affects the x and y-axis. These results seem to indicate that the internal natural convection is not valid for situations where air cannot flow through the voids as in this case. Nevertheless, all these results show that internal natural convection is a relevant mechanism in the heat transfer of stacked foodstuffs stored in boxes, if the air is able to flow through the air voids.

These results also show that internal natural convection lowers/raises the temperature faster than when no internal natural convection occurs.

The models implemented by the method of the first aspect of the present invention have been tested, for an embodiment, in a setting where the air temperature was measured near the boxes and deployed on a loT system for monitoring the cold chain. Indeed, the current loT sensor technology, which could for example be based on wireless technologies such as NB-loT (Narrow Band - loT) or BLE (Bluetooth Low Energy), facilitates the installation of multiple air sensing points within a refrigerated display or cold room, hence, providing air temperature information near the boxes and/or food products.

Finally, regarding the system of the second aspect of the present invention, Figures 8A and 8B present a potential embodiment thereof, for the realization of the current model implemented by the method of the first aspect of the present invention on a cold chain monitoring IoT system equipped with NB loT temperature sensors. Indeed, the loT system has been built and is devoted to monitor the cold chain in commercial and industrial refrigeration systems. The sensors are installed inside the cold room, where they measure the air temperature, as is the common practice in the industry.

The Cloud User Interface (UI) allows the customer to parametrize the food product(s) to model. Therefore, the cloud allows users to define weight, dimensions, and packaging (see Figure 8A) of the food product(s). Once the food product(s) have been configured, the IoT system (by means of cloud computing) reproduces the food product temperature based on the abovementioned parameters and the recorded (by means of the NB loT sensors) air temperature history.

Figure 8B displays the time-history of air and food product temperature during three days for a cold room. The white curve is the air temperature while the other two lines correspond to two different boxed food products. More concretely ,the food products are two different cardboard boxes with 20 kilograms and 40 kilograms of apples, respectively. As can be seen, the model reproduces the effect of the thermal inertia of the products, while in the first temperature excursion air temperature rises up to 14°C, the 20 kg apple box reaches only approximately 7°C while the heavier apple box (40 kg) reaches just 6°C. In the second important temperature excursion, at the end of the third day, one can see that the air temperature reaches 17°C due to a 18h refrigeration system failure. In that period, the 20 kg apple box gets to 15°C and the 40 kg apple box reaches only 13°C. It is interesting to see how for very long temperature excursions, the effect of the thermal inertia becomes less important, as expected.

As demonstrated by the experiments and embodiments described in the present section, the present invention presents a simple model for estimating temperature of food during refrigerated transport and storage. Despite the simplicity of the model, it is shown that food product temperature variations are estimated with good accuracy by the current model.

In this section, it has also been experimentally shown the importance of incorporating into the model implemented by the method of the first aspect of the present invention the internal natural convection and the relevance on how products are stored in boxes (use of plastic wrappings, etc.). Significant differences are observed in the cooling/warming times when air may flow through the air voids left by stacked foodstuffs in boxes and containers. This fact has been considered and properly modelled. The simplicity of the model makes possible to deploy loT systems and tools to monitor both air temperatures and model food temperatures in refrigeration applications along the cold chain. The current model, once applied to cloud-based loT systems will provide reliable information on the impact of temperature excursions during storage of the food products. Moreover, industry operators might also use this information to evaluate the impact of equipment malfunctioning, opening of doors, etc. on the product temperature. Ultimately, the present model implemented by the method of the first aspect of the present invention allows to enhance the overall cold chain management, quality and safety once embedded in IoT cloud-based systems.

A person skilled in the art could introduce changes and modifications in the embodiments described without departing from the scope of the invention as it is defined in the attached claims.

### References:

- Oliveira at al. (2005), "Thermophysical properties of cooked ham"; International Journal of Food Properties, 8(2), 387-394. DOI: 10.1081/JFP-200059501.
- American Society of Heating, Refrigerating and Air-Conditioning Engineers (ASHRAE) (2006). Ashrae Handbook: Refrigeration. ISBN: 9781931862875.
- Kucharek et al. (2020), "Assessment of insulating package performance by mathematical modelling", Packaging Technology and Science, 33(2), 65-73.
- Raval, A.H., Solanki, S.C., & Yadav, R. (2013). A simplified heat transfer model for predicting temperature inside a food package kept in a cold room.
- Van der Smann, R.G.M (2003). Simple model for estimating heat and mass transfer in regular-shaped foods. Journal of Food Engineering, 60, 383-390.
- Globe and Dropkin (1959), "Natural-Convection Heat Transfer in Liquids Confined by Two Horizontal Plates and Heated From Below", Journal of Heat Transfer. 81(1), 24-28.

## Claims

1. A computer-implemented method for estimating the temperature of a refrigerated food product during transport and/or storage, when said refrigerated food product is placed in a refrigerating chamber, comprising:
a) performing and recording a plurality of measurements of at least the temperature of the environment at which a refrigerated food product is exposed at least at a given time;
b) estimating temperature values for the refrigerated food product by computing data representative of said plurality of measurements using one or more convection heat transfer models including one or more natural convection heat transfer models; and
c) providing the temperature values estimated in step b).

2. The computer-implemented method of claim 1, wherein step a) comprises performing and recording said plurality of measurements at different times.

3. The computer-implemented method of any of the previous claims, comprising performing step b) for a refrigerated food product placed inside at least one box, when a natural air convection around the refrigerated food product and/or box is present during a period of time, said one or more natural convection heat transfer models being used to quantify the temperature of the refrigerated food product inside and/or outside said at least one box.

4. The computer-implemented method of any of the previous claims, comprising performing step b) for a current time, by also computing data representative of the temperature, measured or estimated, for a previous time, of the refrigerated food product and the temperature of the environment at which the refrigerated food product was exposed at that previous time.

5. The computer-implemented method of any of the previous claims, comprising performing step b) by computing also data representative of physical properties and/or thermophysical properties and/or physical parameters of the refrigerated food product, including its size and/or shape and/or weight and/or dimensions, and/or by computing also data representative of physical properties and/or physical parameters of the at least one box, including its size and/or shape and/or material.

6. The computer-implemented method of any of the previous claims, comprising performing steps a), b) and c) for a plurality of refrigerated food products placed within at least one box.

7. The computer-implemented method of claim 6, comprising performing said computing of step b) with at least one natural convection heat transfer model that models internal natural convection due to air flows through air voids existing between adjacent refrigerated food products of said plurality of refrigerated food products and/or between the refrigerated food products and the walls of the at least one box.

8. The computer-implemented method of any of the previous claims, comprising performing said computing of step b) by means of a mathematical straight-forward equation.

9. The computer-implemented method of claim 8, wherein said mathematical straight-forward equation is: ${T}_{p} = {T}_{0} + ΔT$ (1)
where *Tₚ* refers to the estimated temperature for the refrigerated food product, *T*₀ is the temperature of the refrigerated food product for a previous time, and Δ*T* is a temperature difference defined as follows: $Δ T = \left({T}_{c}-{T}_{0}\right) ⋅ Δ t ⋅ τ$ (2)
where *T_{c}* is the air temperature inside said refrigerating chamber for said previous time, Δ*t* the time difference between the current time and said previous time, and *τ* is a coefficient that depends at least on the natural convection heat transfer.

10. The computer-implemented method of claim 9, wherein:
- for a refrigerated food product not placed within any box, exposed directly to the air of the refrigerating chamber, *τ* depends on at least one external natural convection heat transfer coefficient, representing the natural convection heat transfer between the refrigerated food product and the air of the refrigerating chamber; and
- for one or more refrigerated food products placed within at least one box, *τ* depends on:
- at least one external natural convection heat transfer coefficient, representing the natural convection heat transfer between the at least one box and the air of the refrigerating chamber, and
- at least one internal natural convection heat transfer coefficient, representing the natural convection heat transfer due to air flows through air voids existing between adjacent refrigerated food products and/or between the refrigerated food products and the walls of the at least one box.

11. The computer-implemented method of claim 10, wherein, for said refrigerated food product not placed within any box, *τ* also depends on the following parameters of the refrigerated food product: density, thermal conductivity, specific heat and dimensions, the type and number of those dimensional parameters depending on the shape of the refrigerated food product.

12. The computer-implemented method of claim 11, wherein those dimensional parameters are collected from dimensional parameters registered for at least the following shapes of the refrigerated food products: sphere, parallelepiped, slice, and cylinder.

13. The computer-implemented method of claim 10, wherein, for said one or more refrigerated food products placed within at least one box, *τ* also depends on the following parameters of an assembly formed by the one or more refrigerated food products, the at least one box, and the air existing within the at least one box: thermal conductivity of the assembly along each of three dimensions of the at least one box, average density of the assembly, and average specific heat of the assembly, and also of dimensional parameters of the at least one box.

14. A system for estimating the temperature of a refrigerated food product placed in a refrigerating chamber, the system comprising:
- a refrigerating chamber for housing said refrigerated food product;
- at least one temperature sensor for performing and recording a plurality of measurements of at least the temperature of the environment at which said refrigerated food product is exposed at least at a given time, at least when placed within said refrigerating chamber; and
- computing means operatively connected to said at least one temperature sensor for receiving that plurality of measurements, and configured for computing data representative of said plurality of measurements using one or more convection heat transfer models including one or more natural convection heat transfer models for estimating temperature values for the refrigerated food product and providing the temperature values estimated.

15. A computer program for estimating the temperature of a refrigerated food product placed in a refrigerating chamber, including program instructions that, when executed in a processor, implement the method of any claims 1 to 13.
